# FASCICULE DE BREVET EUROPEEN

(11) **EP 0 511 276 B1**
(45) Date de publication et mention de la délivrance du brevet: **09.04.1997**
(21) Numéro de dépôt: 91902987.6
(22) Date de dépôt: 14.01.1991
(51) Int. Cl.: A01B 3/40

(54) **DEFLECTEUR**
WENDEKÖRPER
DEFLECTOR

(30) Priorité: 15.01.1990 FR 9000375
(43) Date de publication de la demande: 04.11.1992
(73) Titulaire: COSTE, Denis, F-93270 Sevran (FR)
(72) Inventeur: Coste, Jean-Louis, 77400 Saint Thibault des Vignes (FR)
(86) Numéro de dépôt international: FR9100020
(87) Numéro de publication internationale: WO9110349

(56) Documents cités:
- WO-A-88/01129
- FR-A- 2 390 079
- FR-A- 2 604 850
- US-A- 2 874 788
- US-A- 3 298 445

## Description

La présente invention concerne un déflecteur et une rasette déflectrice de charrue à un ou plusieurs corps à soc et à versoir symétrique, destinée à effectuer un labour dit "à plat" et à être reliée à un tracteur muni d'un attelage pour outil attelé à une puissance de traction où propulsion.

Il est connu suivant le brevet FR-A-2602631, le principe du corps symétrique à versoir et à soc unique pour les deux sens de labour dont la forme creuse horizontalement et verticalement permet d'avoir une longueur d'utilisation plus courte que le versoir symétrique ayant horizontalement la forme traditionnelle. Cependant, selon la nature du sol et le profil du terrain la partie supérieure du versoir a besoin d'être plus longue que la partie inférieure, l'arète frontale qui peut dépasser le sol est plus ou moins proéminente et devant elle s'accumule les débris végétaux, source de mauvais enfouissement et de bourrages entre deux corps successifs. Sur l'avant, la face du versoir émergeant du sol occupe suite à sa position angulaire par rapport à l'avancement, une largeur L d'autant plus importante que le versoir est hors du sol.

Il est connu la rasette simple pour un sens de labour composée d'un soc et d'un versoir, la forme de ce dernier dans sa partie avant et en allant vers le haut est arrondie pour retomber coté guéret, l'objectif est seulement de diviser devant elle la matière organique située au dessus du sol. Une telle rasette simple, connue de l'art antérieur, pour protéger la largeur L et remplir son rôle, c'est-à-dire de diriger vers le sillon la végétation pour qu'elle n'apparaisse pas du labour, devrait avoir une surface de soc et de versoir importante qui provoquerait un semi-labour non souhaité et augmenterait la puissance de traction. Dans le cas d'un corps unique pour les deux sens de travail, deux rasettes sont nécessaires, une pour chaque sens de labour, accroissant la complexité, le poids et le coût de la charrue.

Il est connu selon le brevet FR-A-2390079 la rasette unique, pour les deux sens de labour, comportant un seul soc et un seul versoir à simple face.

Une telle rasette pour déflecter en versant correctement côté sillon dans chaque sens de labour présente avec un versoir plus long dans sa partie supérieure une arète frontale comme celle du versoir 5 du corps, accrochant les débris de surface.

Il est enfin connu le coutre circulaire, simple disque dont l'objectif est de couper en divisant ce qui est devant son passage, il est soit creux ( coté sillon), soit accompagné d'une rasette simple. Il n'offre pas une surface déflectrice orientée pour protéger la largeur L du versoir dépassant du sol, accompagné d'une rasette de surface importante les inconvénients précédemment évoqués réapparaissent.

Les techniques actuellement employées ne répondent pas aux problèmes posés par le corps symétrique.

La présente invention se propose d'offrir des possibilités répondant aux insuffisances ou inconvénients énumérés ci-dessus et d'offrir selon elle une solution soit plus efficace soit moins couteuse en adoptant:
- une surface déflectrice par sens de travail, du type rasette (tranchante ou non) ou (et) circulaire du type coutre circulaire, mais au labour orientant vers le guéret la matière organique, placée devant et protégeant l'arète frontale du versoir située au dessus du sol,
- deux surfaces déflectrices opposées ayant un profil, vues de dessus se rapprochant d'un V, plus ou moins proches l'une de l'autre vers leur avant, fuyantes plus ou moins d'avant en arrière, l'une vers l'extérieur côté guéret, l'autre vers l'intérieur côté sillon précédent et orientant la végétation de part et d'autre.
- un moyen de faire pivoter la (les) surface(s) déflectrice(s) pour faire varier sa (leurs) position(s) par rapport à l'arète frontale du versoir ou (et) dans le cas de la double surface en forme de V de la faire passer d'un sens de travail à l'autre.

L'invention sera mieux comprise à la lecture des descriptions suivantes et à l'examen des dessins annexés qui montrent à titre d'exemples non limitatifs quelques modes de réalisation des divers éléments dans le cadre de l'invention.

Sur ces dessins :

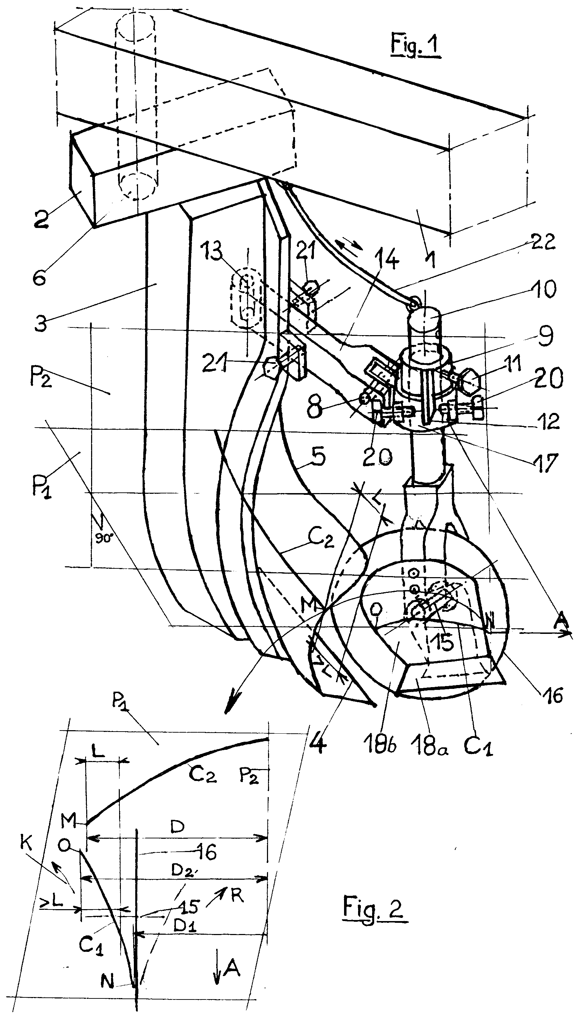

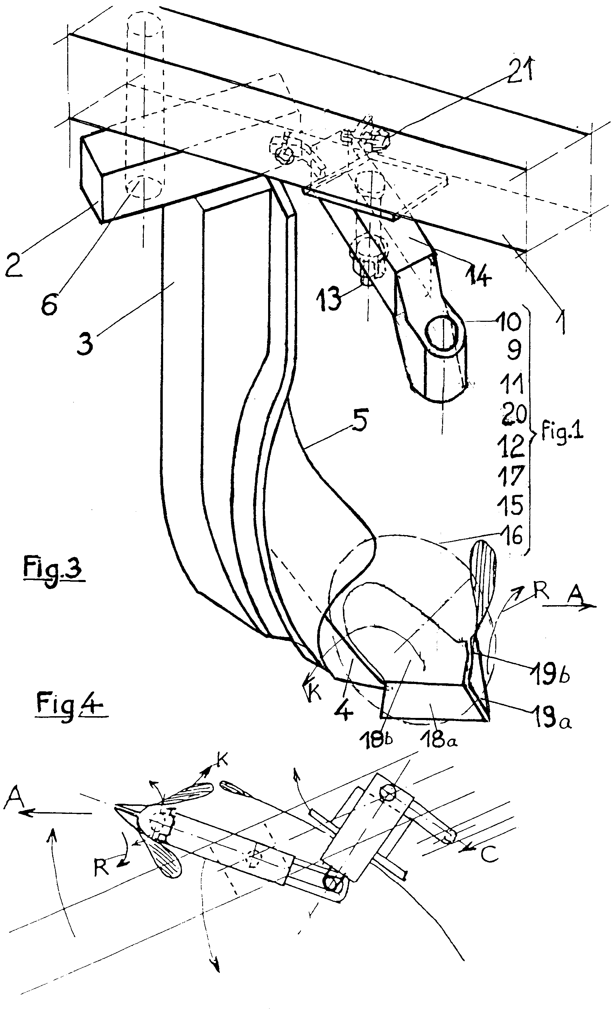

La figure 1 représente une vue en perspective de la surface déflectrice escamotable placée en position de travail devant l'arète frontale du versoir et déflectant la végétation vers l'extérieur côté guéret. Le coutre circulaire 16 placé le long d'elle côté sillon tranche la végétation.
La figure 2 représente une section horizontale P1 située plus ou moins au niveau du sol, limitée vers le centre du corps à un plan vertical P2 parallèle à l'avancement A.
La figure 3 représente une vue en perspective du montage pivotant sous la poutre suivant l'invention d'un déflecteur à deux surfaces, avec son entraînement par le corps lors du pivotement de ce dernier. Un coutre circulaire, suivant une variante de l'invention non représentée, placé entre les deux surfaces, sépare et tranche devant elle la végétation.
La figure 4 représente une vue de dessus schématique montrant le déflecteur composé de deux surfaces devant le corps en position de travail, K est la partie latérale déflectrice, protégeant la partie L de l'arète frontale dépassant du sol, R est la partie frontale opérant en rasette dirigeant la végétation côté sillon. Les deux surfaces déflectrices, selon une variante de l'invention, remplacées chacune par un coutre circulaire creux ou non ne sont pas représentées.

L'ensemble constitué par les figures 1 et 2 comprend: la poutre 1 recevant un axe vertical 6 autour duquel oscille le support 2 de l'étançon 3 recevant à sa partie inférieure le soc 4 et le versoir 5, un bras horizontal 14 vers son arrière placé sur un axe vertical 13 situé sur 3 et réglable latéralement entre deux butées 21 et en son avant recevant un axe horizontal 8 sur lequel s'articule le manchon 17 muni d'un pivot vertical dans lequel tourillonne la partie supérieure du manche 10 qui reçoit à sa partie inférieure au moins une surface déflectrice 18a, 18b circulaire ou non, pénétrant dans le sol au moins par sa partie inférieure, le tourillonnement étant limité au moyen du moyeu 9 bloqué sur lui par la vis 11, ce moyeu étant muni d'un taquet 12 qui vient heurter avec plus ou moins de jeu deux butées réglables 20 appartenant au manchon 17.

Suivant l'invention la surface déflectrice 18a, 18b est positionnée au travail plus ou moins proche de la parallèle à l'avancement A mais de forme et orientée telles qu'un plan horizontal P1 placé au voisinage du sol, perpendiculaire à un plan vertical P2 parallèle à l'avancement A et situé par exemple pour qu'il coupe en deux parties le soc 4 et le versoir 5, détermine en coupant surface la déflectrice 18a, 18b et le versoir 5 respectivement deux lignes C1 et C2, la distance D entre le plan vertical P2 et le point M de la ligne C2 appartenant à l'arète frontale du versoir 5 étant comprise entre: D1, distance du point N situé à l'avant de la ligne C1 au plan vertical P2 et D2 distance du point O situé à l'arrière de la ligne C1 au plan vertical P2, D2 étant supérieure à D1; les lignes C1 et C2 pouvant être droites ou plus ou moins courbes.

Selon différents modes particuliers de l'invention:
- la surface déflectrice 18a, 18b est du type rasette,
- la surface déflectrice est un disque 16 libre de tourner sur un axe 15, plat ou creux.
- une deuxième surface déflectrice de l'un ou l'autre type précédent est apposée ou opposée à la première, se situant l'une par rapport à l'autre plus ou moins proche par leur avant, et orientée soit pour trancher devant elle, soit pour trancher et diriger la végétation vers l'intérieur du corps coté sillon précédent. Dans le cas où un ensemble tel que décrit est placé devant chacune des deux arètes latérales du versoir 5 mises alternativement en position frontale, une liaison 22 entre chaque manche 10 et un point de la poutre permet, lorsque l'étançon 3 en pivotant sur la poutre 1 éloigne de celle-ci le manche 10, le pivotement de ce dernier autour de l'axe 8 dégage du sol l'un des deux ensembles en le remontant alors que l'autre s'abaisse.

L'ensemble représenté par la figure 3, selon un mode particulier de l'invention, est un ensemble à deux surfaces déflectrices 18a, 18b, 19a, 19b opposées l'une à l'autre unique pour les deux sens de labour. Dans ce cas le bras 14 est, entre ses extrémités pivotant autour d'un axe vertical 13 situé dans le plan vertical de symétrie longitudinale de la poutre 1 et par son extrémité arrière, incluant deux butés réglables 21, entrainé avec plus ou moins de jeu alternativement pour chaque sens de labour par l'avant du support 2 de l'étançon qui s'imbrique entre les dites butés 21. La figure ne représente que la version du type rasette bien que les solutions offertes dans le cas d'un déflecteur par sens de labour (voir fig.1) soient également prévues. Une des possibilités offertes concerne la position plus particulière des deux surfaces déflectrices: lorsque l'une extérieure et orienté plus ou moins proche de la parallèle à l'avancement A éloigne coté guéret la végétation de l'arête frontale du versoir, l'autre intérieure au corps est orientée plus ou moins de la parallèle au corps pour diriger la végétation vers le sillon précédent (l et k).

La position plus ou moins à l'extérieur coté guéret de la surface déflectrice extérieure par rapport à l'arète frontale du versoir, suivant la profondeur de labour et la largeur L du versoir 5 à protéger, peut être ajustée par le triple réglage suivant :
- réglage des butées 21 de fin de course du bras 14,
- coulissement du manche 10 dans le moyeu 9,
- limitation L1 du pivotement de (des) la (deux) surface(s) déflectrice(s) 18a, 18b, 19a, 19b par les deux butées 20.

Le fonctionnement est le suivant:
1) Dans le cas de deux surfaces déflectrices indépendantes tel que fig.1 l'escamotage de l'une quand l'autre se place en position de travail s'effectue par le moyen connu d'un câble qui relie chacune à un point fixe de la poutre.
2) Dans le cas de la double surface formant rasette déflectrice fig.3 et fig.4 ,
lorsque l'axe 6 pivote, par l'action d'une commande centralisée C de tous les corps sous la poutre 1 pour passer d'un sens de travail à l'autre, l'extrémité avant du support 2 vient en contact avec une des butées 21 pour l'entraîner vers l'autre sens de travail et venir appuyer la butée correspondante 20 sur le taquet 12 sous l'action de la pression du sol, lorsque la charrue est abaissée et que les corps pénètrent dans le sol. En effet, le jeu entre 12 et 20 permet cette liberté de fin de course de 14 jusqu'à sa butée 21. Pendant ce temps chacune des 2 faces 18-19 de la rasette rempli un rôle inverse: celle qui déversait la bande décapée et la végétation vient en position de déflecteur, protégeant l'arête frontale du versoir 4. L'autre qui remplissait le rôle de déflecteur occupe plus ou moins la position de rasette.

## Revendications

1. Déflecteur destiné à être placé vers l'avant de l'arète frontale d'un versoir de corps de charrue à soc et à versoir symétrique supporté par un étançon (3) pivotant sous une poutre 1 pour un ou deux sens de labour, du type pourvu d'un moyen de liaison (14) pivotant autour d'un axe (13) fixé à un élément de la charrue et d'un support (10) recevant au moins une surface déflectrice (18a, 18b) dont au moins la partie inférieure est destinée à pénétrer dans le sol, caractérisé en ce que la dite surface déflectrice est disposée par rapport à son moyen de liaison de sorte à être orientée de manière proche d'une parallèle à la direction d'avancement A de la charrue en étant dirigée d'avant en arrière vers l'extérieur côté guéret de façon telle qu'un plan horizontal P1 placé au voisinage du sol, perpendiculaire à un plan vertical P2 parallèle à l'avancement A et situé par exemple pour qu'il coupe en deux parties le soc (4) et le versoir (5), détermine, en coupant la surface déflectrice (18a, 18b) et le versoir (5) respectivement, deux lignes C1 et C2, la distance D entre le plan vertical P2 et le point M de la ligne C2 appartenant à l'arête frontale du versoir (5) étant comprise entre: D1 distance du point N, situé à l'avant de la ligne C1, au plan vertical P2 et D2 distance du point O, situé à l'arrière de la ligne C1, au plan vertical P2, D2 étant supérieure à D1, les lignes C1 et C2 pouvant être droites ou plus ou moins courbes de sorte à rejeter vers l'extérieur côté guéret la végétation située le long d'elle en l'éloignant de l'arête frontale proéminente dudit versoir (5).

2. Déflecteur selon la revendication 1 caractérisé en ce que la surface déflectrice est un circulaire et libre de tourner sur un axe.

3. Déflecteur selon l'une quelconque des revendications 1 à 2 caractérisé en ce qu'une seconde surface déflectrice (19a, 19b) destinée à rejeter vers l'intérieur (côté sillon précédent) la végétation située le long d'elle, est positionnée par son avant sur l'avant de la première surface déflectrice pour former avec elle un angle en forme de V, et orientée par rapport à la direction d'avancement A de la charrue en étant dirigée d'avant en arrière vers l'intérieur côté labour.

4. Déflecteur selon l'une quelconque des revendications 1 et 3 caractérisé en ce que l'axe (13) est situé dans le plan vertical de symétrie de la poutre (1).

5. Déflecteur selon l'une quelconque des revendications 1 à 4 caractérisé en ce que le moyen de liaison (14) des surfaces déflectrices oscille de part et d'autre du plan vertical de symétrie du corps autour de l'axe (13) de sorte à faire passer ledit déflecteur d'un sens de travail à l'autre devant l'arète frontale proéminente du versoir, chaque surface déflectrice jouant le rôle alternativement, pour un sens de labour de protection de ladite arète frontale, pour l'autre sens de labour de rasette.

## Claims

1. Deflector designed to be positioned towards the front of the mould board of a plough body with a ploughshare and a symmetrical mould board* supported by a prop (3) pivoting under a beam 1 for one or two ploughing directions, of the type provided with a connection means (14) pivoting about a shaft (13) affixed to an element of the plough and with a support (10) accommodating at least one deflecting surface (18a, 18b) of which at least the lower part is designed to penetrate the ground, characterised by the fact that the said deflecting surface is so positioned in relation to its connecting means as to be situated approximately parallel to the feed direction of the plough and is directed from front to rear outwards, on the furrow side, in such a way that a horizontal plane P1 situated close to the ground and perpendicular to a vertical plane P2 parallel to the feed direction A and so situated, for example, that it bisects the ploughshare (4) and the mould board (5), determines, by cutting the deflecting surface (18a, 18b) and the mould board (5) respectively, two lines C1 and C2, while the distance D between the vertical plane P2 and the point M on the line C2 belonging to the front edge of the mould board (5) is included between: D1, distance from point N, situated in front of the line C1, to the vertical plane P2, and D2, distance from point 0, situated to the rear of tie line C1, to the vertical plane P2, D2 being greater than D1, while the lines C1 and C2 may be straight or more or less curved so as to throw out, on the furrow side, the vegetation present along it, moving it away from the projecting front edge of the said mould board (5)

2. Deflector in accordance with Claim 1, characterised by the fact that the deflecting surface is circular and free to turn on one shaft.

3. Deflector in accordance with either of Claims 1 and 2, characterised by the fact that a second deflector surface (19a, 19b), designed to throw in towards the inside (preceding furrow) the vegetation situated along it, is positioned by its front part on the front of the first deflector surface, with which it thus forms V-shaped structure, and is so orientated in relation to the feed direction A of the plough that it is directed from the front rearwards towards the interior on the ploughing side.

4. Deflector in accordance with either of Claims 1 and 3 , characterised by the fact that the shaft (13) is situated in the vertical plane of symmetry of the beam (1).

5. Deflector in accordance with any one of Claims 1 to 4, characterised by the fact that the connection means (14) for the deflecting surfaces oscillates on each side of the vertical plane of symmetry of the body about the shaft (13) in such a way as to cause the said deflector to move from one direction of operation to the other in front of the projecting front edge of the mould board, each deflecting surface functioning alternately as a protection for the said front edge in one direction of operation and as a skimmer (skim coulter?) in the other direction of operation.

## Patentansprüche

1. Ablenker, dazu bestimmt, vor der Vorderkante eines Streichblechs eines Pflugkörpers mit Schar und symmetrischem Streichblech angeordnet zu worden, das von einer Pflugrahmenstrebe (3) getragen wird, die unter einem Balken (1) für ein oder zwei Pflügrichtungen schwenkbar ist, welcher Ablenker mit einem Verbindungsmittel (14), das um eine Achse (13) schwenkt, die an einem Element des Pfluges befestigt ist, und mit einem Halter (10) verbunden ist, und mindestens eine Ablenkfläche (18a, 18b) aufweist, von der zumindest der untere Teil dazu bestimmt ist, in den Boden einzudringen, dadurch gekennzeichnet, daß die Ablenkfläche in Bezug auf ihr Verbindungsmittel so angeordnet ist, daß sie nahe einer Parallelen zur Richtung der Vorwärtsbewegung A des Pfluges ausgerichtet ist, wobei sie von vorn nach hinten nach außen zur Landseite gerichtet ist, so daß eine horizontale Ebene P1, die sich in der Nähe des Bodens befindet und senkrecht zu einer vertikalen Ebene P2 ist, welche parallel zur Vorwärtsbewegung A ist und zum Beispiel so angeordnet ist, daß sie die Schar (4) und das Streichblech (5) in zwei Teile schneidet, zwei Linien C1 und C2 bestimmt, indem sie die Ablenkfläche (18a, 18b) bzw. das Streichblech (5) schneidet, wobei der Abstand D zwischen der vertikalen Ebene P2 und dem Punkt M der Linie C2, die zur Vorderkante des Streichblechs (5) gehört, zwischen: D1, dem Abstand des vorn auf der Linie C1 befindlichen Punktes N zur vertikalen Ebene P2, und D2, dem Abstand des sich hinten auf der Linie C1 befindlichen Punktes O zur vertikalen Ebene P2, liegt, wobei D2 größer als D1 ist, wobei die Linien C1 und C2 gerade oder mehr oder weniger gekrümmt sein können, so daß die entlang derselben befindliche Vegetation durch Verlängerung der vorspringenden Vorderkante des Streichblechs (5) nach außen zur Landseite gewiesen wird.

2. Ablenker nach Anspruch 1, dadurch gekennzeichnet, daß die Ablenkfläche eine Scheibe ist und frei um eine Achse drehen kann.

3. Ablenker nach einem der Ansprüche 1 bis 2, dadurch gekennzeichnet, daß eine zweite Ablenkfläche (19a, 19b), die dazu bestimmt ist, die entlang derselben befindliche Vegetation nach innen (Seite der vorhergehenden Furche) zu weisen, mit ihrem Vorderteil an dem Vorderteil der ersten Ablenkfläche angeordnet ist, um mit dieser einen V-förmigen Winkel zu bilden, und in Bezug auf die Richtung der Vorwärtsbewegung A des Pfluges so ausgerichtet ist, daß sie von vorn nach hinten nach innen zur Furchenseite gerichtet ist.

4. Ablenker nach einem der Ansprüche 1 und 3, dadurch gekennzeichnet, daß sich die Achse (13) in der vertikalen Symmetrieebene des Balkens (1) befindet.

5. Ablenker nach einem der Ansprüche 1 bis 4, dadurch gekennzeichnet, daß das Verbindungsmittel (14) der Ablenkflächen auf beiden Seiten der vertikalen Symmetrieebene des Körpers um die Achse (13) schwenkt, um den Ablenker vor der vorspringenden Vorderkante des Streichblechs vorbei von einer Arbeitsrichtung in die andere zu bewegen, wobei jede Ablenkfläche abwechselnd für eine Pflügrichtung die Aufgabe des Schutzes der Vorderkante, für die andere Pflügrichtung die Aufgabe eines Vorschälers übernimmt.
